# EUROPEAN PATENT APPLICATION

(11) **EP 4 572 401 A1**
(43) Date of publication of application: **18.06.2025**
(21) Application number: 23858920.4
(22) Date of filing: 30.06.2023
(51) Int. Cl.: H04W 36/00, H04W 48/20

(54) **SELECTION METHOD AND APPARATUS FOR SERVING CELL**

(30) Priority: 27.08.2022 CN 202211036219
(71) Applicant: Huawei Technologies Co., Ltd., Shenzhen, Guangdong 518129 (CN)
(72) Inventor: TANG, Zhenfei, Shenzhen, Guangdong 518129 (CN); LI, Xinxian, Shenzhen, Guangdong 518129 (CN); PENG, Jinlin, Shenzhen, Guangdong 518129 (CN); ZHOU, Guohua, Shenzhen, Guangdong 518129 (CN)
(74) Representative: Pfenning, Meinig & Partner mbB
(86) International application number: PCT/CN2023/105278
(87) International publication number: WO 2024/045882

(57) **Abstract**

A serving cell selection method and an apparatus are provided. The method includes: A terminal sends an uplink reference signal; and a base station determines an uplink serving cell based on quality of the uplink reference signal received in different cells. Therefore, uplink quality of the determined uplink serving cell is superior, and uplink transmission efficiency of the terminal is improved.

## Description

This application claims priority to Chinese Patent Application No. 202211036219.8, filed with the China National Intellectual Property Administration on August 27, 2022 and entitled "SERVING CELL SELECTION METHOD AND APPARATUS", which is incorporated herein by reference in its entirety.

### TECHNICAL FIELD

This application relates to the field of wireless communication, and more specifically, to a serving cell selection method and an apparatus.

### BACKGROUND

Conventionally, one user equipment (user equipment, UE) usually performs communication by one or more cells. If the UE performs communication by one cell, the cell includes one downlink carrier and one or two uplink carriers. If the UE performs communication (carrier aggregation) by a plurality of cells, a primary cell includes one downlink carrier and one or two uplink carriers, and a secondary cell includes one downlink carrier and zero, one, or two uplink carriers. Usually, an uplink spectrum resource and a downlink spectrum resource of a cell in a frequency division duplex (frequency division duplex, FDD) system are different; and an uplink spectrum resource and a downlink spectrum resource of a cell in a time division duplex (time division duplex, TDD) system are the same.

Mobility management is to manage location information and service continuity of a mobile terminal, and select a superior wireless link to provide a wireless communication service for the UE. During mobility management, when selecting a serving cell, the UE receives a downlink reference signal sent by a network side, and determines communication quality of the serving cell based on signal strength of the received downlink reference signal. The UE reports the signal strength of the received downlink reference signal to a base station. Usually, the base station selects the serving cell for the UE based on the signal strength that is of the downlink reference signal and that is reported by the UE. The UE performs uplink communication and downlink communication by the selected serving cell. For the UE, downlink communication quality of the serving cell may be superior, but uplink communication quality of the serving cell may not be superior.

### SUMMARY

This application provides a serving cell selection method and an apparatus, to improve uplink communication quality of a terminal.

According to a first aspect, a serving cell selection method is provided. The method includes: A terminal sends a reference signal, where the reference signal is used to determine an uplink serving cell. The terminal receives indication information from a first radio access network device, where the indication information includes information of the uplink serving cell. The first radio access network device is a radio access network device that currently serves the terminal.

The uplink serving cell that is of the terminal and that is determined based on the foregoing technical solution is a serving cell in which uplink communication quality of the terminal is superior. Therefore, the uplink communication quality of the terminal can be improved.

In a possible implementation, the method further includes: The terminal receives configuration information from the first radio access network device. The configuration information includes at least one of the following: carrier information of the reference signal, time-frequency resource information of the reference signal, sequence information of the reference signal, scrambling code information of the reference signal, power information of the reference signal, and an area identifier of a candidate uplink serving cell, and the candidate uplink serving cell includes the uplink serving cell.

The configuration information is used by the terminal to send the reference signal. The terminal may send the reference signal on a resource indicated by the configuration information. In addition, the terminal may generate the reference signal based on the configuration information. For example, the terminal scrambles the reference signal based on an area identifier indicated by the configuration information, so that the reference signal can be detected in all serving cells in an area identified by the area identifier, and implementation complexity of sending the reference signal by the terminal is reduced.

In a possible implementation, the information of the uplink serving cell includes an identifier of the uplink serving cell.

In a possible implementation, the indication information further includes at least one of the following: a temporary cell-radio network temporary identifier TC-RNTI, timing advance adjustment information, and frequency offset adjustment information in the uplink serving cell. The timing advance adjustment information is used by the terminal to adjust uplink time, so that the uplink time of the terminal is synchronized with uplink time of a radio access network device that serves the uplink serving cell. The frequency offset adjustment information is used by the terminal to perform frequency compensation, so that an uplink frequency of the terminal is synchronized with an uplink frequency of a radio access network device that serves the uplink serving cell.

In a possible implementation, the method further includes: The terminal sends an uplink access message, where the uplink access message includes the identifier of the uplink serving cell. Specifically, the terminal sends the uplink access message to the radio access network device that serves the uplink serving cell, where the uplink access message is used to establish an RRC connection between the terminal and the uplink serving cell.

According to a second aspect, a serving cell selection method is provided. The method includes: A first radio access network device receives, in a first cell, a reference signal from a terminal, to obtain first quality information of the reference signal. The first radio access network device determines an uplink serving cell of the terminal based on the first quality information of the reference signal. The first radio access network device sends indication information to the terminal, where the indication information includes information of the uplink serving cell. The second aspect is a method on a radio access network device side corresponding to the first aspect. Therefore, beneficial effects in the first aspect can also be implemented.

In a possible implementation, the method further includes: The first radio access network device receives first information from a second radio access network device, where the first information indicates second quality information of the reference signal received in a second cell of the second radio access network device.

In a possible implementation, that the first radio access network device determines an uplink serving cell of the terminal based on the first quality information of the reference signal includes: determining, based on the first quality information and the second quality information, that the first cell is the uplink serving cell of the terminal.

In a possible implementation, the method further includes: The first radio access network device sends configuration information to the terminal. The configuration information includes at least one of the following: carrier information of the reference signal, time-frequency resource information of the reference signal, sequence information of the reference signal, scrambling code information of the reference signal, power information of the reference signal, and an area identifier of a candidate uplink serving cell, and the candidate uplink serving cell includes the uplink serving cell.

In a possible implementation, the information of the uplink serving cell includes an identifier of the uplink serving cell.

In a possible implementation, the indication information further includes at least one of the following: a temporary cell-radio network temporary identifier TC-RNTI, timing advance adjustment information, and frequency offset adjustment information in the uplink serving cell.

In a possible implementation, the first information further indicates at least one of the following: identification information of the reference signal received in the second cell, the timing advance adjustment information, and the frequency offset adjustment information.

In a possible implementation, the method further includes: receiving an uplink access message from the terminal, where the uplink access message includes the identifier of the uplink serving cell.

According to a third aspect, a communication apparatus is provided, and includes a processor and an interface circuit. The interface circuit is configured to: receive a signal from another communication apparatus and transmit the signal to the processor, or send a signal from the processor to another communication apparatus. The processor implements, using a logic circuit or by executing code instructions, the method according to any one of the first aspect or the possible implementations of the first aspect, or implements the method according to any one of the second aspect or the possible implementations of the second aspect.

According to a fourth aspect, a computer-readable storage medium is provided. The storage medium stores a computer program or instructions. When the computer program or the instructions are executed by a communication apparatus, the method according to any one of the first aspect and the possible implementations of the first aspect is implemented, or the method according to any one of the second aspect and the possible implementations of the second aspect is implemented.

According to a fifth aspect, a computer program product including instructions is provided. When the instructions are executed by a communication apparatus, the communication apparatus is enabled to implement the method according to any one of the first aspect and the possible implementations of the first aspect, or implement the method according to any one of the second aspect and the possible implementations of the second aspect.

### BRIEF DESCRIPTION OF DRAWINGS

FIG. 1 is a diagram of an architecture of a communication system to which an embodiment of this application is applied;
FIG. 2 is a diagram of an application scenario of a macro cell and a small cell;
FIG. 3 is a diagram of an application scenario in which there are a plurality of frequencies;
FIG. 4 is a diagram of an application scenario in which a station disables transmission to save energy;
FIG. 5 is a diagram of an application scenario in which only a receiving function is configured for some stations;
FIG. 6 is a schematic interaction flowchart of a serving cell selection method according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of another communication apparatus according to an embodiment of this application.

### DESCRIPTION OF EMBODIMENTS

The following describes technical solutions of this application with reference to accompanying drawings.

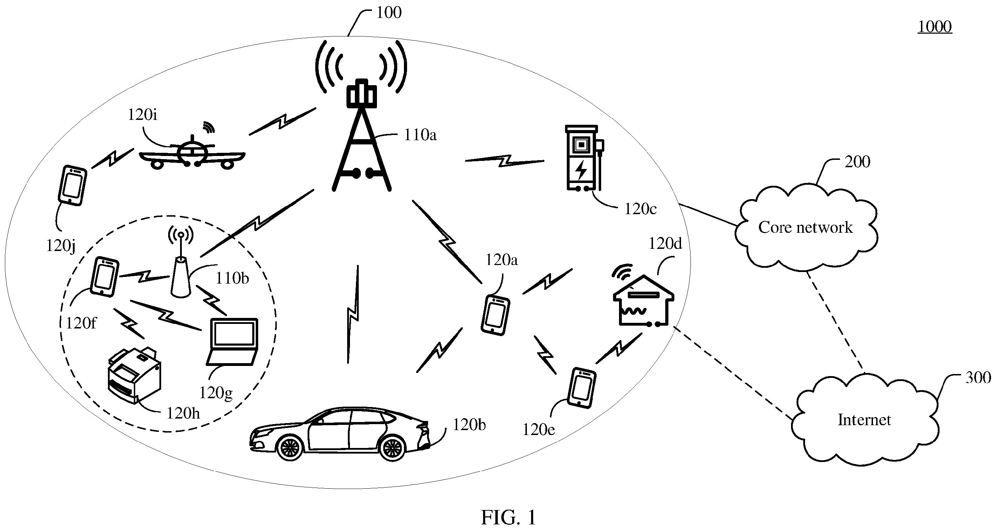

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device that are not shown in FIG. 1.

The radio access network device is an access device through which the terminal to access the communication system in a wireless manner. The radio access network device may be a base station (base station), an evolved NodeB (evolved NodeB, eNodeB), a transmission reception point (transmission reception point, TRP), a next generation base station (next generation NodeB, gNB) in a 5^{th} generation (5^{th} generation, 5G) mobile communication system, a next generation base station in a 6^{th} generation (6^{th} generation, 6G) mobile communication system, a base station in a future mobile communication system, an access node in a Wi-Fi system, or the like. Alternatively, the radio access network device may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications in the 3^{rd} generation partnership project (3^{rd} generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. An apparatus configured to implement a function of the radio access network device may be a radio access network device, or may be an apparatus, for example, a chip system, that can support the radio access network device in implementing the function. The apparatus may be installed in the radio access network device. The following describes the technical solutions provided in embodiments of this application by using an example in which a base station is used as the radio access network device.

The terminal is a device having a wireless transceiver function, and may send a signal to the base station, or receive a signal from the base station. The terminal may also be referred to as a terminal device, UE, a mobile station, a mobile terminal, or the like. The terminal may be widely used in various scenarios, for example, a device-to-device scenario, a vehicle-to-everything communication scenario, a machine-type communication scenario, an internet of things scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, a smart city scenario, and a smart home scenario. The terminal may be a mobile phone, a tablet computer, a computer having a wireless transceiver function, a wearable device, a vehicle, an airplane, a ship, a robot, a mechanical arm, a smart home device, or the like. A specific technology and a specific device form that are used by the terminal are not limited in embodiments of this application. In embodiments of this application, an apparatus configured to implement a function of the terminal may be a terminal, or may be an apparatus, for example, a chip system, that can support the terminal in implementing the function. The apparatus may be installed in the terminal. In embodiments of this application, the chip system may include a chip, or may include a chip and another discrete device. The following describes the technical solutions provided in embodiments of this application by using an example in which UE is used as the terminal.

The base station and the terminal may be at a fixed location or may be movable. The base station and the terminal may be deployed on land, including an indoor or outdoor scenario and a handheld or vehicle-mounted scenario, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an unmanned aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between a base station and a terminal, between base stations, or between terminals may be performed over a licensed spectrum, or may be performed over an unlicensed spectrum, or may be performed over both a licensed spectrum and an unlicensed spectrum. Communication may be performed over a spectrum of 6 gigahertz (gigahertz, GHz) or below, or may be performed over a spectrum of at least 6 GHz. Alternatively, communication may be performed over both a spectrum of 6 GHz or below and a spectrum of at least 6 GHz. A spectrum resource used for wireless communication is not limited in embodiments of this application.

In embodiments of this application, a function of the base station may alternatively be performed by a module (for example, a chip) in the base station, or may be performed by a control subsystem having a base station function. The control subsystem having the base station function herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus having a terminal function.

In this application, the base station sends a downlink signal or downlink information to the terminal, where the downlink signal or the downlink information is carried on a downlink channel; and the terminal sends an uplink signal or uplink information to the base station, where the uplink signal or the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighbor cell.

The following briefly describes some terms in embodiments of this application.

### (1) Radio resource control (radio resource control, RRC) idle state

An RRC idle state is a state of UE in which an RRC connection is not established. The UE in the idle state releases an RRC connection between the UE and a base station, and the UE and the base station that last provides a service for the UE release a context of the UE.

A network may configure specific discontinuous reception (discontinuous reception, DRX) for the UE in the RRC idle state, and the UE in the idle state controls mobility based on a network configuration. The UE in the idle state may monitor a short message on downlink control information (downlink control information, DCI), monitor paging from a core network, perform neighbor cell measurement and cell reselection, and further obtain a system message.

### (2) RRC inactive state

UE in an RRC inactive state releases an RRC connection between the UE and a base station, but the UE and the base station that last provides a service for the UE store a context of the UE.

A network may configure specific DRX for the UE in the RRC inactive state, and the UE in the inactive state controls mobility based on a network configuration. The UE in the inactive state may monitor a short message on DCI, monitor paging of a core network and a radio access network (radio access network, RAN), may perform neighbor cell measurement and cell reselection, obtain a system message, and further periodically perform RAN-based notification area updates.

### (3) RRC connected state

An RRC connection has been established between UE in an RRC connected state and a base station, the UE stores a context of an access stratum, and unicast data may be transmitted between the base station and the UE.

A network side may configure specific DRX for the UE in the RRC connected state, and the network side controls mobility of the UE. The UE in the RRC connected state may monitor a short message on DCI, monitor a control channel, provide channel feedback information, perform neighbor cell measurement and measurement reporting, and further obtain a system message.

(4) Mobility management is to manage location information and service continuity of a mobile terminal, and select a superior wireless link to provide a wireless communication service for UE.

The foregoing describes terms and concepts in embodiments of this application. The following describes a scenario to which a serving cell selection method provided in embodiments of this application is applied.

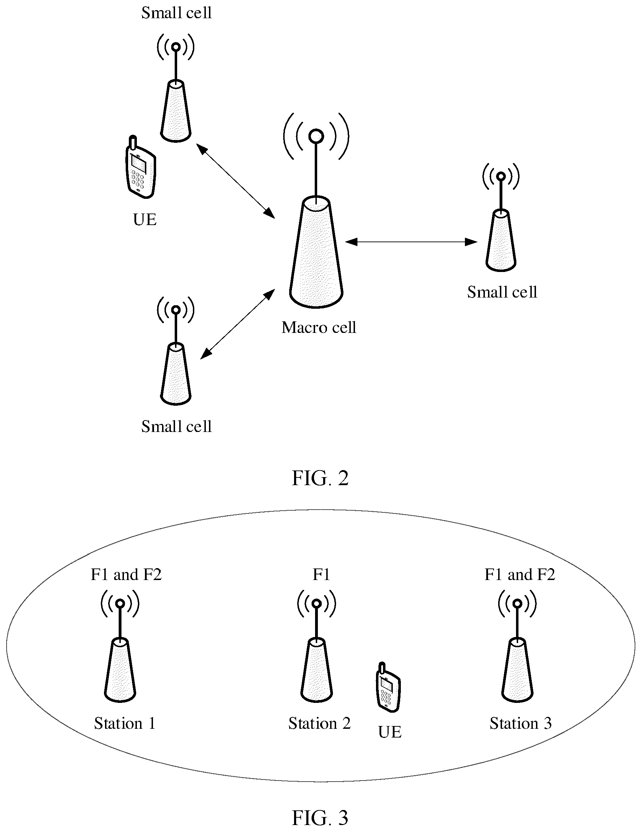

FIG. 2 to FIG. 5 are diagrams of four different application scenarios to which an embodiment of this application is applicable. Macro cells and small cells are two deployment forms of base stations. FIG. 2 is a diagram of an application scenario of a macro cell and a small cell. A macro cell and a small cell are deployed in a network. The macro cell has a high transmit power, a large quantity of antennas, and a large coverage area, and forms a large serving cell. The small cell has a low transmit power, a small quantity of antennas, and a small coverage area, and forms a small serving cell. Frequencies supported by the macro cell and the small cell may be the same or different. The network selects one or more serving cells for UE based on services, location information, channel quality of the UE, and other factors. When the UE is close to the small cell, due to the high transmit power of the macro cell, a power of a downlink signal received by the UE from the macro cell is higher, so that it is more suitable for accessing the macro cell in downlink. However, because the UE is closer to the small cell, when a transmit power of the UE is given, a power of an uplink signal received by the small cell is higher, so that it is more suitable for accessing the small cell in uplink.

FIG. 3 is a diagram of an application scenario in which there are a plurality of frequencies. A plurality of stations constitute a network, and frequencies supported by the plurality of stations are not completely the same. The station in this application may be a base station, or may be a TRP in the base station, or may be a reception point or a transmission point in the base station. For example, both a station 1 and a station 3 support two frequencies F1 and F2, and a station 2 supports one frequency F1. The frequency F2 is lower than the frequency F1. When UE is close to the station 2, due to the low frequency and less signal attenuation of the frequency F2, a power of a downlink signal that is at the frequency F2 and that is received by the UE from the station 3 is higher, so that it is more suitable for accessing the frequency F2 of the station 3 in downlink. When a transmit power of the UE is given, a power of an uplink signal received by the station 2 is higher, so that it is more suitable for accessing the station 2 in uplink.

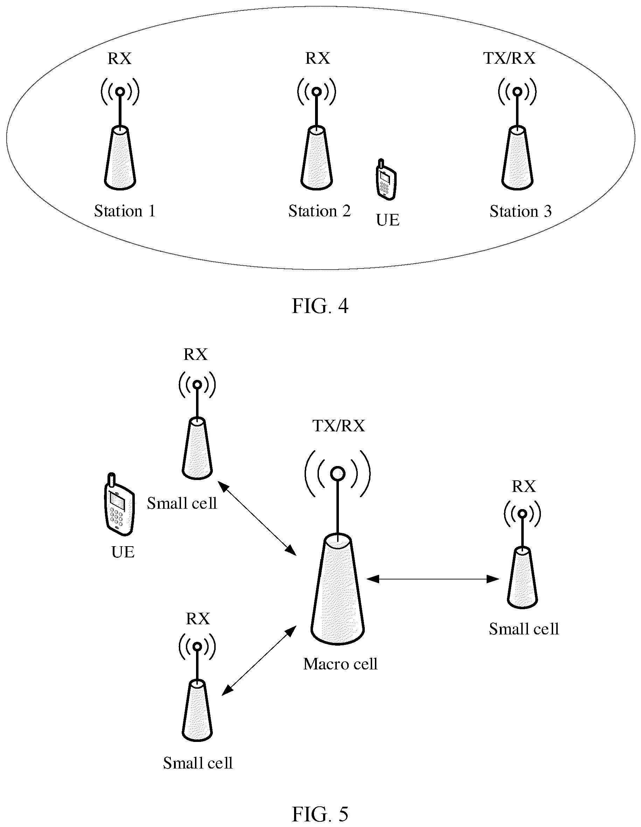

FIG. 4 is a diagram of an application scenario in which a station disables transmission to save energy. When a service transmission amount is small, a network may shut down a transmit (transmit, TX) module or some devices of a station to save energy. As shown in FIG. 4, a station 1 and a station 2 shut down transmit modules, and only receive (receive, RX) modules work. A station 3 works normally, and includes a transmit module and a receive module. UE may be served by the station 3 in downlink. The UE may be served by the station 2 in uplink, or a plurality of stations provide an uplink service together.

FIG. 5 is a diagram of an application scenario in which only a receiving function is configured for some stations. To reduce network deployment costs, some stations that only perform reception are deployed to improve uplink service performance. A macro cell works normally, and includes a transmit module and a receive module. A small cell includes only a receive module. As shown in FIG. 5, UE accesses a macro cell in downlink, and in uplink, the UE may be served by a small cell that only performs reception.

The following briefly describes mobility management in this application.

Mobility management includes mobility management based on a downlink reference signal and mobility management based on an uplink reference signal. The downlink reference signal includes a channel state information reference signal (channel state information reference signal, CSI-RS) or a synchronization signal and physical broadcast channel block (synchronization signal and physical broadcast channel block, SSB). The uplink reference signal includes a sounding reference signal (sounding reference signal, SRS) or a discovery reference signal (discovery reference signal, DRS) or another reference signal. Mobility management includes three operations: cell selection, cell reselection, and cell handover.

### 1. Cell selection

For UE in an RRC idle state, the UE starts cell search and selects a suitable cell to camp on after being powered on.

A procedure of downlink mobility management includes: The UE has not yet camped on a cell after being powered on, and needs to select a cell from a plurality of cells to camp on. Cell selection may be performed based on signal quality/signal strength of downlink reference signals, namely, SSBs of different cells, or cell selection may be performed based on stored information.

### 2. Cell reselection

For UE in an RRC idle state or an RRC inactive state, the UE still continues to observe nearby cells after camping on a cell, and adjusts the camped cell by comparing signal quality and signal strength of different cells.

A procedure of downlink mobility management includes:
Step (1): The UE performs neighbor cell measurement. After camping on a cell, the UE measures a neighbor cell based on downlink signal quality/signal strength of the current serving cell and frequency priority information of neighbor cell. The measured frequency is a neighboring frequency broadcast by a system or a frequency carried in an RRC connection release (RRC connection release) message. Specifically, an intra-frequency measurement rule and an inter-frequency measurement rule are included.

Intra-frequency measurement rule: If the signal quality/signal strength of the current serving cell is good, for example, the signal quality/signal strength of the current serving cell is greater than a given threshold, intra-frequency measurement is not started. If the serving cell does not meet a specific condition, for example, the signal quality/signal strength of the cell is not greater than a given threshold, intra-frequency measurement is started.

Inter-frequency measurement rule: If a priority of an inter-frequency frequency or an inter-system frequency is higher than that of a current serving frequency, the UE measures the inter-frequency frequency and the inter-system frequency regardless of the signal quality/signal strength of the current serving cell. If a priority of an inter-frequency frequency is lower than that of a current serving frequency, and a priority of an inter-system frequency is lower than that of the current serving frequency, the measurement rule is the same as the intra-frequency measurement rule.

Step (2): The UE adjusts the camped cell based on the signal quality/signal strength of the current serving cell and signal quality/signal strength of the neighbor cell.

### 3. Cell handover

For UE in an RRC connected state, after the UE camps on a cell and initiates random access to enter the RRC connected state, a base station adjusts a cell that the UE accesses based on coverage, a service, or a distance, to ensure a stable connection of a service of the UE.

A procedure of downlink mobility management includes:
Step (1): Trigger the UE to perform measurement. After the UE completes access or the handover is successful, the base station delivers measurement control information to the UE. The measurement control information includes a measurement object, a measurement resource configuration, a measurement event, and the like. The measurement resource configuration includes a downlink signal SSB or CSI-RS configuration.
Step (2): Perform measurement. The UE monitors a radio channel based on a related configuration of measurement control, and reports to the base station with an event when a measurement report condition is met.
Step (3): Target decision. The base station makes a decision on a handover policy, a target cell, and a frequency based on a measurement result.
Step (4): Handover execution. A source base station initiates a handover request to a target base station. After receiving the handover request, the target base station performs admission control, allocates a UE instance and a transmission resource after admission is allowed, and replies to the source base station with handover permission signaling. The source base station makes a decision on handover execution, and delivers a handover command to the UE. The UE performs handover and data forwarding. The source base station is a current serving base station of the UE, and the target base station is a serving base station after the UE performs cell handover.

In the foregoing procedures of cell selection, cell reselection, and cell handover, uplink and downlink are bound. This imposes a great limitation on uplink and/or downlink experience of the UE. Specifically, in the current mobility management in the foregoing four scenarios shown in FIG. 2 to FIG. 5, the UE performs cell selection, cell reselection, and cell handover based on a downlink signal, and an uplink carrier is bound to a downlink carrier or a downlink subframe is bound to an uplink subframe. Therefore, the UE cannot separately select a downlink carrier of a first cell and an uplink carrier of a second cell for communication, or cannot separately select a downlink subframe of a first cell and an uplink subframe of a second cell for communication. That is, an uplink serving cell and a downlink serving cell of the UE need to be a same cell. When the UE achieves superior downlink communication quality, uplink communication quality may not be superior; or when the UE achieves superior uplink communication quality, downlink communication quality may not be superior.

Therefore, an embodiment of this application provides a serving cell selection method, to improve uplink communication quality of a terminal.

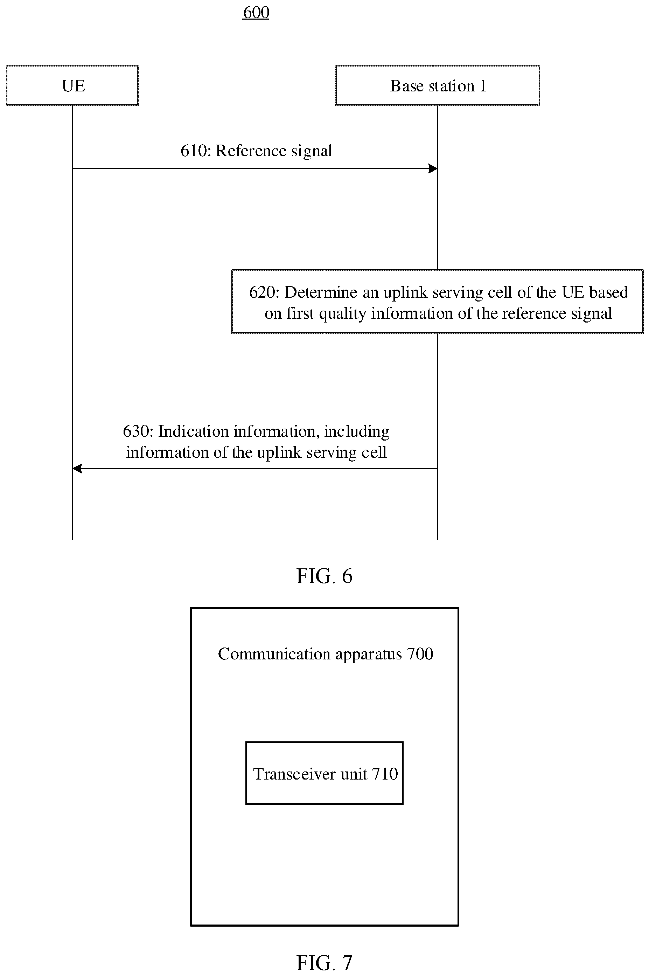

FIG. 6 is a schematic interaction flowchart of a serving cell selection method 600 according to an embodiment of this application. In this embodiment of this application, examples in which UE is a terminal, a base station 1 is a first radio access network device, and a base station 2 is a second radio access network device are used for description.

610: The UE sends a reference signal, where the reference signal is used to determine an uplink serving cell of the UE. Specifically, the UE sends the reference signal to one or more candidate serving cells, and all base stations that manage the plurality of candidate serving cells may receive the reference signal sent by the UE. The base station 1 is a serving base station of the UE. The serving base station in this application is a base station that manages a downlink serving cell of the UE.

Optionally, the base station 1 sends configuration information to the UE. The configuration information is used by the UE to send the reference signal, and the configuration information includes at least one of the following: carrier information of the reference signal, time-frequency resource information of the reference signal, sequence information of the reference signal, scrambling code information of the reference signal, power information of the reference signal, and an area identifier of a candidate uplink serving cell. Correspondingly, the UE receives the configuration information from the base station 1, and sends the reference signal based on the configuration information.

The carrier information of the reference signal includes information such as a subcarrier spacing and a location of a point A. The location of the point A is a central location of a subcarrier 0 of a common physical resource block 0 on a carrier. The carrier information of the reference signal is used by the UE to determine a carrier used when the reference signal is sent. The carrier information includes uplink carrier information, and optionally, further includes downlink carrier information. The time-frequency resource information of the reference signal indicates a time domain resource and a frequency domain resource that are used when the UE sends the reference signal. The sequence information of the reference signal includes information used in a process in which the UE generates a reference signal sequence. The scrambling code information of the reference signal is used by the UE to determine a scrambling code for scrambling the reference signal. The power information of the reference signal is used by the UE to determine a transmit power used when the reference signal is sent.

The area identifier of the candidate uplink serving cell is used to identify an area in which a plurality of candidate uplink serving cells that may provide a service for the UE are located. Specifically, the UE may send the reference signal to the base station 1 in the area identified by the area identifier of the candidate uplink serving cell, and the UE may further send the reference signal to the base station 2 in the area. There may be one or more base stations 2 herein. The UE may scramble the reference signal by using the area identifier. That is, a generated sequence formula of the reference signal includes the area identifier. The UE only needs to generate one reference signal sequence by using the area identifier, and both the base station 1 and the base station 2 in the area may receive the reference signal based on the corresponding area identifier, so that implementation complexity of sending the reference signal by the UE is reduced.

For example, when the UE is in an RRC connected state, the base station 1 may send the configuration information to the UE in a broadcast manner. For example, the base station 1 may notify the UE of the configuration information by using a system information block (system information block, SIB) message. Alternatively, the base station 1 may send the configuration information to the UE by using a UE-specific message, for example, a UE-specific RRC message, a media access control control element (MAC control element, MAC CE), or DCI. This is not limited in this application. For example, when the UE is in an RRC idle state or an RRC inactive state, the base station 1 sends the configuration information to the UE in a broadcast manner.

Optionally, the reference signal may be sent periodically, or may be sent aperiodically. That is, the UE may send the reference signal periodically based on the configuration information, or may send the reference signal aperiodically. For example, a trigger condition for the UE in the RRC connected state to send the reference signal aperiodically may be that service transmission fails or uplink channel quality is poor. For another example, a trigger condition for the UE in the RRC idle state or the RRC inactive state to send the reference signal aperiodically may be network side paging, tracking area update, update of the area identifier of the candidate serving cell, or the like.

Correspondingly, the base station receives the reference signal from the terminal. For example, the base station 1 receives, in a first cell of the base station 1, the reference signal from the UE, to obtain first quality information of the reference signal. Specifically, the base station 1 receives the reference signal from the UE based on the configuration information. The candidate serving cell includes the first cell.

For example, the base station 2 receives, in a second cell of the base station 2, the reference signal from the UE based on the configuration information, to obtain second quality information of the reference signal. The candidate serving cell includes the second cell.

The receiving the reference signal from the UE may be understood as detecting or monitoring the reference signal from the UE on a time-frequency resource indicated by the configuration information. The base station 1 and the base station 2 that serve the UE may determine the configuration information of the reference signal through information exchange. For example, a time-frequency resource used by the UE to send the reference signal to the base station 1 is determined by the base station 1 and sent to the UE; and a time-frequency resource used by the UE to send the reference signal to the base station 2 is determined by the base station 2 and sent to the base station 1, and then the base station 1 sends the configuration information to the UE.

The base station 2 may send first information to the base station 1, and the first information includes the second quality information. Correspondingly, the base station 1 receives the first information from the base station 2. Quality information of the reference signal may be reference signal received power (reference signal received power, RSRP), or may be reference signal received quality (reference signal received quality, RSRQ), or may be a signal-to-interference-plus-noise ratio or a signal-to-noise ratio of the reference signal.

Optionally, the first information may further include at least one of the following information determined by the base station 2: identification information of the reference signal, timing advance (timing advance, TA) adjustment information, frequency offset adjustment information, and the like. If the base station 1 directly sends the timing advance adjustment information sent by the base station 2 to the UE, the timing advance adjustment information is used by the UE to determine TA between the UE and the base station 2. Alternatively, if the base station 1 determines new TA adjustment information between the UE and the base station 2 based on the timing advance adjustment information, the base station 1 sends the new TA adjustment information to the UE, and the UE determines TA between the UE and the base station 2 based on the new TA adjustment information, so that uplink time synchronization between the UE and the base station 2 is enabled. The frequency offset adjustment information is frequency offset information determined by the base station 2 based on the reference signal sent by the UE, and is used by the base station 2 to perform frequency compensation. The frequency offset adjustment information is sent to the UE, and the UE may perform frequency compensation, so that uplink frequency synchronization between the UE and the base station 2 is enabled.

It should be understood that the base station 1 interacts with the base station 2 in the area. After the UE accesses the base station 1, the base station 2 may learn, through interaction with the base station 1, that the base station 1 is a serving base station of the UE. In the current case, a selection, reselection, or handover operation of a serving cell of the UE is completed by the base station 1.

Optionally, after receiving the reference signal sent by the UE, the base station 2 may directly send the determined first information to the base station 1. Optionally, after receiving the reference signal sent by the UE, the base station 2 may determine, based on the quality information of the received reference signal and a preset threshold, whether to send the first information to the base station 1. For example, if signal quality indicated by the quality information of the reference signal exceeds the preset threshold, the base station 2 sends the first information to the base station 1; or if signal quality indicated by the quality information of the reference signal does not exceed the preset threshold, the base station 2 does not send the first information or sends feedback information indicating access rejection. It should be understood that the preset threshold may be predefined or specified in a protocol, or may be sent by the base station 1 to the base station 2.

620: The base station 1 determines the uplink serving cell of the UE based on the first quality information of the reference signal.

For example, if the base station 2 also receives the reference signal from the UE, and the base station 1 receives the first information from the base station 2, the base station 1 determines, based on the first quality information of the reference signal and the second quality information of the reference signal, that the first cell is the uplink serving cell of the UE, where signal quality indicated by the first quality information is better than signal quality indicated by the second quality information.

For example, if the base station 2 also receives the reference signal from the UE, and the base station 1 receives the first information from the base station 2, the base station 1 determines, based on the first quality information of the reference signal and the second quality information of the reference signal, that the second cell is the uplink serving cell of the UE, where signal quality indicated by the second quality information is better than signal quality indicated by the first quality information.

Optionally, the uplink serving cell that is of the UE and that is determined by the base station 1 may be a serving cell having superior signal quality of the reference signal received by the base station in the candidate serving cell. Optionally, there may be one or more uplink serving cells of the UE. This may be specifically determined based on a capability reported by the UE.

630: The base station 1 sends indication information to the UE, where the indication information includes information of the uplink serving cell of the UE.

Optionally, the information of the uplink serving cell includes an identifier of the uplink serving cell. Optionally, the indication information may further include at least one of the following: a temporary cell-radio network temporary identifier (temporary cell-radio network temporary identifier, TC-RNTI), timing advance adjustment information, and frequency offset adjustment information in the uplink serving cell. The TC-RNTI of the UE in the uplink serving cell is allocated by a base station that manages the uplink serving cell.

For example, when the UE is in the RRC idle state or the RRC inactive state, the indication information may further include information of the downlink serving cell of the UE, for example, an identifier of the downlink serving cell of the UE.

The uplink serving cell of the UE and the downlink serving cell of the UE may be a same cell, or may be different cells. However, the uplink serving cell is a serving cell that is determined by the base station 1 based on the uplink reference signal sent by the UE and in which uplink communication quality is superior; and the downlink serving cell is a serving cell that is determined by the base station 1, or the base station 1 and the base station 2 by sending a downlink signal and based on signal quality of the downlink signal received by the UE and in which downlink communication quality is superior.

Correspondingly, the UE receives the indication information from the base station 1. The UE accesses the uplink serving cell based on the information that is about the uplink serving cell and that is included in the indication information.

If the UE has camped on a cell managed by the base station 1, and has initiated random access to enter the RRC connected state, the UE performs uplink serving cell handover after receiving the indication information. If the UE is in the RRC idle state or the RRC inactive state, the UE performs uplink serving cell selection or reselection after receiving the indication information.

Optionally, the UE sends, based on the indication information, an uplink access message to the base station 1 that manages the uplink serving cell. The uplink access message includes the identifier of the uplink serving cell, and the uplink access message is used to establish an RRC connection between the UE and the uplink serving cell. Correspondingly, the base station that manages the uplink serving cell receives the uplink access message from the UE, and establishes the RRC connection between the uplink serving cell and the UE based on the uplink access message.

Optionally, the base station that manages the uplink serving cell may be the base station 1, or may be the base station 2. That is, the uplink serving cell of the UE and the downlink serving cell of the UE may be managed by a same base station, or the uplink serving cell of the UE and the downlink serving cell of the UE may be managed by different base stations.

Optionally, after successfully accessing the uplink serving cell, the UE may send a message indicating completion of the uplink serving cell access to the base station 1 and/or the base station that manages the uplink serving cell. The UE communicates with the base station that manages the uplink serving cell.

In an implementation, the uplink serving cell and the downlink serving cell of the UE belong to different cells. The uplink serving cell that provides an uplink communication service for the UE includes only an uplink carrier, and the uplink carrier in the uplink serving cell provides the uplink communication service for the UE. The downlink serving cell that provides a downlink communication service for the UE includes only a downlink carrier, and the downlink carrier in downlink serving cell provides the downlink communication service for the UE. The carrier that is in the uplink serving cell and that provides the uplink communication service for the UE may be referred to as an uplink serving carrier, and the carrier that is in the downlink serving cell and that provides the downlink communication service for the UE may be referred to as a downlink serving carrier.

In another implementation, the uplink serving cell and the downlink serving cell of the UE belong to different cells. The uplink serving cell that provides an uplink communication service for the UE includes one downlink carrier and one or two uplink carriers, and the one or two uplink carriers in the uplink serving cell provide the uplink communication service for the UE. The downlink serving cell that provides a downlink communication service for the UE includes one downlink carrier and one or two uplink carriers, and the downlink carrier in the downlink serving cell provides the downlink communication service for the UE. The carrier that is in the uplink serving cell and that provides the uplink communication service for the UE may be referred to as an uplink serving carrier, and the carrier that is in the downlink serving cell and that provides the downlink communication service for the UE may be referred to as a downlink serving carrier.

In still another implementation, the uplink serving cell and the downlink serving cell of the UE belong to a same cell. A serving cell that provides an uplink communication service and a downlink communication service for the UE includes one downlink carrier and one or two uplink carriers. The one or two uplink carriers in the serving cell provide the uplink communication service for the UE, and the downlink carrier in the serving cell provides the downlink communication service for the UE. The carrier that is in the serving cell and that provides the uplink communication service for the UE may be referred to as an uplink serving carrier, and the carrier that is in the serving cell and that provides the downlink communication service for the UE may be referred to as a downlink serving carrier.

Optionally, the uplink serving carrier of the UE and the downlink serving carrier of the UE may be carriers in a same frequency band, or may be carriers in different frequency bands.

In the technical solution provided in this embodiment of this application, the UE sends the reference signal used to determine the uplink serving cell, the base station 1, or the base station 1 and the base station 2 may receive the uplink reference signal sent by the UE, and the base station 1 determines the uplink serving cell of the UE based on the first quality information of the reference signal received in the first cell, or based on the first quality information and the second quality information of the reference signal received by the base station 2 in the second cell. The uplink serving cell of the UE determined in this solution is a serving cell in which uplink communication quality of the UE is superior. Therefore, the uplink communication quality of the UE can be improved.

It may be understood that, to implement functions in the foregoing embodiments, the base station and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 7 to FIG. 9 are diagrams of structures of possible communication apparatuses according to an embodiment of this application. These communication apparatuses may be configured to implement functions of the terminal (UE) or the first radio access network device (base station 1) in the foregoing method embodiments, and therefore can also implement beneficial effects of the foregoing method embodiments. In this embodiment of this application, the communication apparatus may be one of the terminals 120a to 120j shown in FIG. 1, or may be the base station 110a or 110b shown in FIG. 1, or may be a module (for example, a chip) used in a terminal or a base station.

As shown in FIG. 7, a communication apparatus 700 includes a transceiver unit 710. The communication apparatus 700 is configured to implement functions of the UE in the method embodiment shown in FIG. 6.

The transceiver unit 710 is configured to send a reference signal, and the reference signal is used to determine an uplink serving cell.

The transceiver unit 710 is further configured to receive indication information from a base station 1, and the indication information includes information of the uplink serving cell.

Optionally, the transceiver unit 710 is further configured to receive configuration information from the base station 1. The configuration information includes at least one of the following: carrier information of the reference signal, time-frequency resource information of the reference signal, sequence information of the reference signal, scrambling code information of the reference signal, power information of the reference signal, and an area identifier of a candidate uplink serving cell, and the candidate uplink serving cell includes the uplink serving cell.

Optionally, the transceiver unit 710 is specifically configured to send an uplink access message, and the uplink access message includes an identifier of the uplink serving cell.

For more detailed descriptions of the transceiver unit 710, refer to related descriptions in the method embodiment shown in FIG. 6.

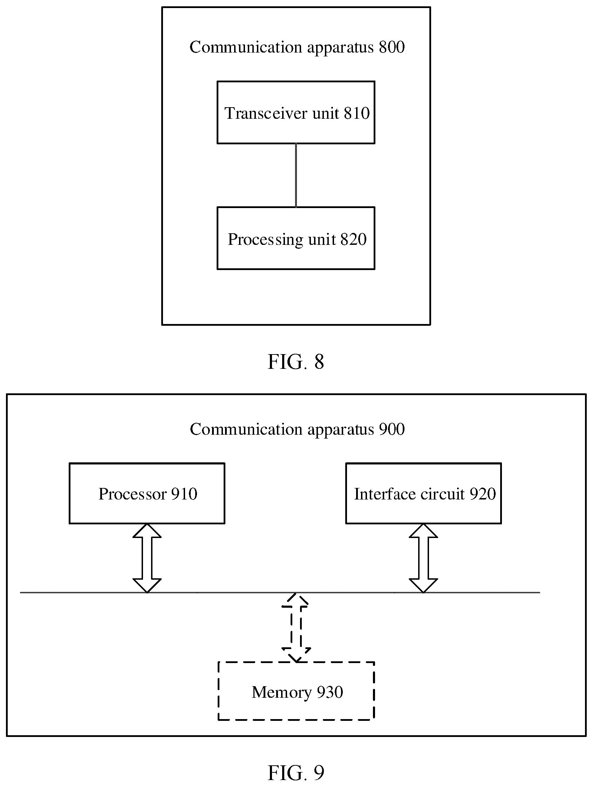

As shown in FIG. 8, a communication apparatus 800 includes a transceiver unit 810 and a processing unit 820. The communication apparatus 800 is configured to implement functions of the base station 1 in the method embodiment shown in FIG. 6.

The transceiver unit 810 is configured to receive, in a first cell, a reference signal from UE, to obtain first quality information of the reference signal.

The processing unit 820 is configured to determine an uplink serving cell of the UE based on the first quality information of the reference signal.

The transceiver unit 810 is further configured to send indication information to the UE, and the indication information includes information of the uplink serving cell.

Optionally, the transceiver unit 810 is further configured to receive first information from a base station 2, and the first information indicates second quality information of the reference signal received in a second cell of the base station 2.

Optionally, the processing unit 820 is specifically configured to determine, based on the first quality information and the second quality information, that the first cell is the uplink serving cell of the UE.

Optionally, the transceiver unit 810 is further configured to send configuration information to the UE. The configuration information includes at least one of the following: carrier information of the reference signal, time-frequency resource information of the reference signal, sequence information of the reference signal, scrambling code information of the reference signal, power information of the reference signal, and an area identifier of a candidate uplink serving cell, and the candidate uplink serving cell includes the uplink serving cell. Optionally, the transceiver unit 810 is further configured to receive an uplink access message from the UE, and the uplink access message includes an identifier of the uplink serving cell.

For more detailed descriptions of the transceiver unit 810, refer to related descriptions in the method embodiment shown in FIG. 6.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the method shown in FIG. 6, the processor 910 is configured to implement a function of the processing unit 820, and the interface circuit 920 is configured to implement a function of the transceiver unit 710 or the transceiver unit 810.

When the communication apparatus is a chip used in a terminal, the chip in the terminal implements functions of the terminal in the foregoing method embodiments. The chip in the terminal receives information from another module (for example, a radio frequency module or an antenna) in the terminal, and the information is sent by a base station to the terminal. Alternatively, the chip in the terminal sends information to another module (for example, a radio frequency module or an antenna) in the terminal, and the information is sent by the terminal to a base station.

When the communication apparatus is a module used in a base station, the module in the base station implements functions of the base station in the foregoing method embodiments. The module in the base station receives information from another module (for example, a radio frequency module or an antenna) in the base station, and the information is sent by a terminal to the base station. Alternatively, the module in the base station sends information to another module (for example, a radio frequency module or an antenna) in the base station, and the information is sent by the base station to a terminal. The module in the base station herein may be a baseband chip in the base station, or may be a DU or another module. The DU herein may be a DU in an open radio access network (open-RAN, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may alternatively exist in a base station or terminal as discrete components.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

## Claims

1. A serving cell selection method, performed by a terminal or a module used in a terminal, comprising:
sending a reference signal, wherein the reference signal is used to determine an uplink serving cell; and
receiving indication information from a first radio access network device, wherein the indication information comprises information of the uplink serving cell.

2. The method according to claim 1, wherein the method further comprises:
receiving configuration information from the first radio access network device, wherein the configuration information comprises at least one of the following: carrier information of the reference signal, time-frequency resource information of the reference signal, sequence information of the reference signal, scrambling code information of the reference signal, power information of the reference signal, and an area identifier of a candidate uplink serving cell, and the candidate uplink serving cell comprises the uplink serving cell.

3. The method according to claim 1 or 2, wherein
the information of the uplink serving cell comprises an identifier of the uplink serving cell.

4. The method according to any one of claims 1 to 3, wherein
the indication information further comprises at least one of the following: a temporary cell-radio network temporary identifier TC-RNTI, timing advance adjustment information, and frequency offset adjustment information in the uplink serving cell.

5. The method according to claim 3 or 4, wherein the method further comprises:
sending an uplink access message, wherein the uplink access message comprises the identifier of the uplink serving cell.

6. A serving cell selection method, performed by a first radio access network device or a module used in a first radio access network device, and comprising:
receiving, in a first cell, a reference signal from a terminal, to obtain first quality information of the reference signal;
determining an uplink serving cell of the terminal based on the first quality information of the reference signal; and
sending indication information to the terminal, wherein the indication information comprises information of the uplink serving cell.

7. The method according to claim 6, wherein the method further comprises:
receiving first information from a second radio access network device, wherein the first information indicates second quality information of the reference signal received in a second cell of the second radio access network device.

8. The method according to claim 7, wherein the determining an uplink serving cell of the terminal based on the first quality information of the reference signal comprises:
determining, based on the first quality information and the second quality information, that the first cell is the uplink serving cell of the terminal.

9. The method according to any one of claims 6 to 8, wherein the method further comprises:
sending configuration information to the terminal, wherein the configuration information comprises at least one of the following: carrier information of the reference signal, time-frequency resource information of the reference signal, sequence information of the reference signal, scrambling code information of the reference signal, power information of the reference signal, and an area identifier of a candidate uplink serving cell, and the candidate uplink serving cell comprises the uplink serving cell.

10. The method according to any one of claims 6 to 9, wherein the information of the uplink serving cell comprises an identifier of the uplink serving cell.

11. The method according to any one of claims 6 to 10, wherein the indication information further comprises at least one of the following: a temporary cell-radio network temporary identifier TC-RNTI, timing advance adjustment information, and frequency offset adjustment information in the uplink serving cell.

12. The method according to any one of claims 7 to 11, wherein the first information further indicates at least one of the following: identification information of the reference signal received in the second cell, the timing advance adjustment information, and the frequency offset adjustment information.

13. The method according to any one of claims 10 to 12, wherein the method further comprises:
receiving an uplink access message from the terminal, wherein the uplink access message comprises the identifier of the uplink serving cell.

14. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 13 using a logic circuit or by executing code instructions.

15. A computer-readable storage medium, wherein the storage medium stores a computer program or instructions, and when the computer program or the instructions are executed by a communication apparatus, the method according to any one of claims 1 to 13 is implemented.
